(19) Europäisches Patentamt

European Patent Office

Office européen des brevets

(11) Publication number: **0 288 744 B1**

# EUROPEAN PATENT SPECIFICATION

(45) Date of publication of patent specification: **08.07.92** (51) Int. Cl.⁵: **B25J 15/04**

(21) Application number: **88104722.9**

(22) Date of filing: **24.03.88**

(54) **Coupling device in an industrial robot.**

(30) Priority: **31.03.87 SE 8701333**

(43) Date of publication of application:
**02.11.88 Bulletin 88/44**

(45) Publication of the grant of the patent:
**08.07.92 Bulletin 92/28**

(84) Designated Contracting States:
**DE FR GB IT**

(56) References cited:
**DE-A- 3 300 361**
**GB-A- 781 465**
**GB-A- 1 378 196**
**US-A- 4 046 262**
**US-A- 4 611 377**

(73) Proprietor: **ASEA BROWN BOVERI AB**

**S-721 83 Västeras(SE)**

(72) Inventor: **Jannborg, Björn**
**Löpargatan 6**
**S-722 41 Västeräs(SE)**

(74) Representative: **Boecker, Joachim, Dr.-Ing.**
**Rathenauplatz 2-8**
**W-6000 Frankfurt a.M. 1(DE)**

## Description

The invention relates to a device in an industrial robot according to the precharacterising part of Claim 1. Such a robot is known from GB-A-781 465.

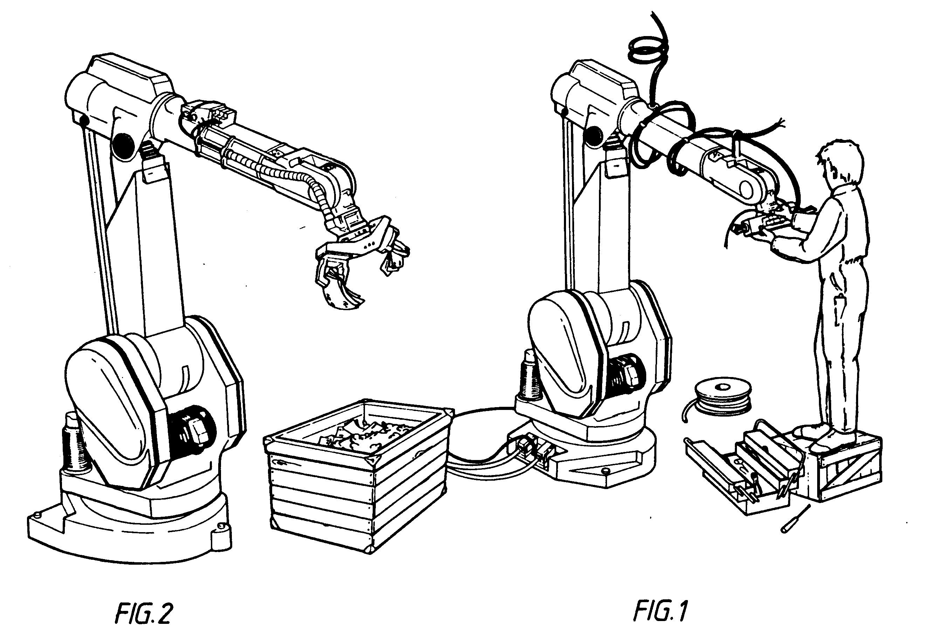

As the field of applications of industrial robots is successively increasing, increasingly greater demands are placed on the movability of the robot wrist and hence on the tool carried by the robot hand. While in the past it was sufficient for the tool to be rotatable one turn around its own axis, demands have increased nowadays and it can be assumed that eventually demands will be placed on multi-turn rotatability. Since, in addition, the tool carried by the robot hand must be capable of being supplied with both, electric operating current and hydraulic and pneumatic impulses, problems may arise since this supply has up to now taken place by means of loose wires and hoses respectively, as will be clear from Figure 1. Further, the tool must be capable of being rapidly exchanged, which in prior art devices has been accomplished by a special quick coupling between a tool holder attachment, often called swivel axis, carried by the robot hand, and a detachable tool holder. In those cases where electric operating current has been supplied to the tool, however, electric wires have still been laid all the way up to the tool, which has rendered the exchange of tools extremely difficult since these wires must first be disconnected from the former tool and then again connected to the new tool. Also hoses for a hydraulic or pneumatic working medium have been laid in the same way when they have been needed.

The GB-A-781 465 describes an industrial robot the hand of which comprises a tool holder that is rotatably arranged in another part of the robot hand. To transfer electric current from the portion accommodating the rotatable tool holder to the tool holder a slip-ring-brush-arrangement is provided. However, the tool holder is not designed to be detachable under normal operation from the part which carries the tool holder and thus the slip-rings and brushes are not designed or usable as breaking members for the supply of electric current.

The invention aims at developing a device of the afore-mentioned kind for an industrial robot in which of the aforementioned deficiencies have been eliminated.

To achieve this aim the invention suggests a device in an industrial robot according to the introductory part of Claim 1, which is characterized by the features of the characterizing part of Claim 1.

Further developments of the invention are characterized by the features of the additional claims.

The invention eliminates the drawback of loose electric wires, running from the robot and the non-rotatable housing over to the rotatable tool, and getting twisted around the robot arm concurrently with the tool rotating two or more turns. Also, and perhaps even more important, a real quick coupling and de-coupling is achieved which also comprises the electric transmission between the tool holder attachment and the tool holder, owing to the fact that the slip ring device is used also as an electric breaking member.

In those cases where it is necessary to supply also pneumatic or hydraulic operating power, a hoseless quick coupling means is also arranged for this purpose, according to the invention. This means comprises channels provided in the above-mentioned housing emerging at the boundary between the housing and the shaft for the tool holder attachment rotatably journalled in the housing. The channels communicate with slots arranged around the shaft of the tool holder attachment and are provided either in said shaft or in the housing. Channels are provided in the tool holder attachment, one end of these channels communicating with the mentioned slots and the other end of the channels emerging at the boundary between the tool holder attachment and the detachable tool holder. In the tool holder corresponding channels are arranged adapted to be connected, when the tool holder is inserted into the tool holder attachment, into sealing connection with the channels of the tool holder attachment, thus establishing an electrical and pneumatic (or hydraulic) connection between the robot arm and the tool completely without wires and hoses (see Figure 2). The device thus exhibits the following advantages:

- A rapid exchange of tools is obtained in spite of the fact that both electric current and compressed air (or a hydraulic liquid) are supplied to the tool from the robot arm,
- loose cables or hoses, which may be worn out or torn off, are avoided,
- the tool can be rotated an unlimited number of turns, and finally
- the device contributes to the design of a compact and reliable robot.

The invention will now be described in greater detail with reference to the accompanying drawings showing - by way of example - in

Figure 1    a prior art embodiment with loose cables and hoses,

Figure 2    an embodiment of a device according to the invention,

Figure 3    the outer part of the robot arm with the pivotable hand or, as it is also called, the tilt housing and the swivel mounted thereon with no tool,

Figure 4    the same outer part in a somewhat different position and also the detachable tool holder,

Figure 5    an exploded view of certain parts of the robot as well as the different housings with tool holder attachment, tool holder and tool that may be used,

Figure 6    a view of the housing with the tool holder attachment (also called swivel), partly in section and partly with walls being broken away

Figure 7    the tool holder,

Figure 8    a schematic sketch of the invention.

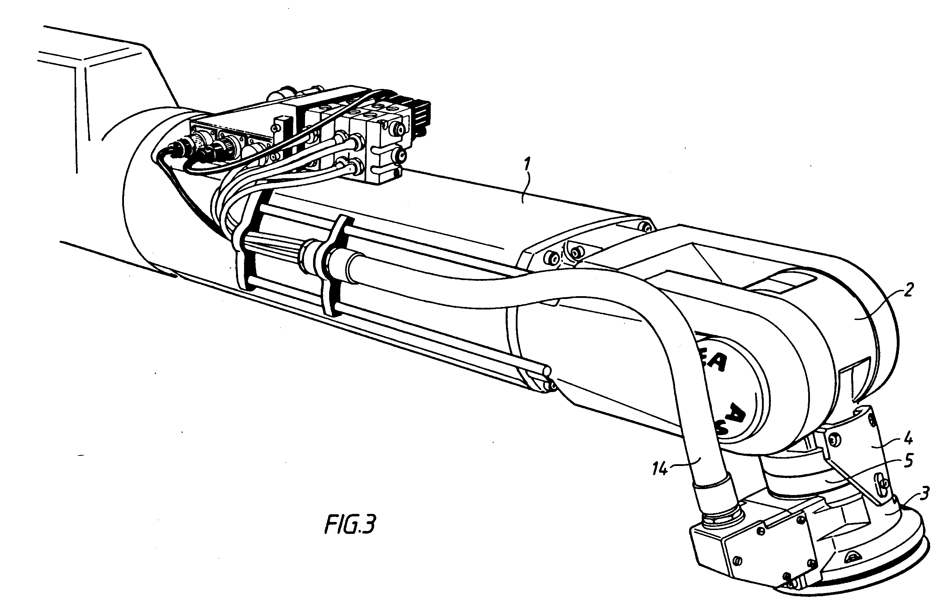

In Figure 3 the numeral 1 designates the actual robot arm and 2 the pivotable outer joint, the tilt housing, or the robot hand. The hand 2 supports a housing 3 fixed to the hand 2 by means of a holder 4. In the housing 3 a tool holder attachment (not shown) is rotatably mounted and connected to the rotating disc 5 which rotates the tool holder attachment. The housing 3 with the enclosed rotatable tool holder attachment is often referred to as the swivel.

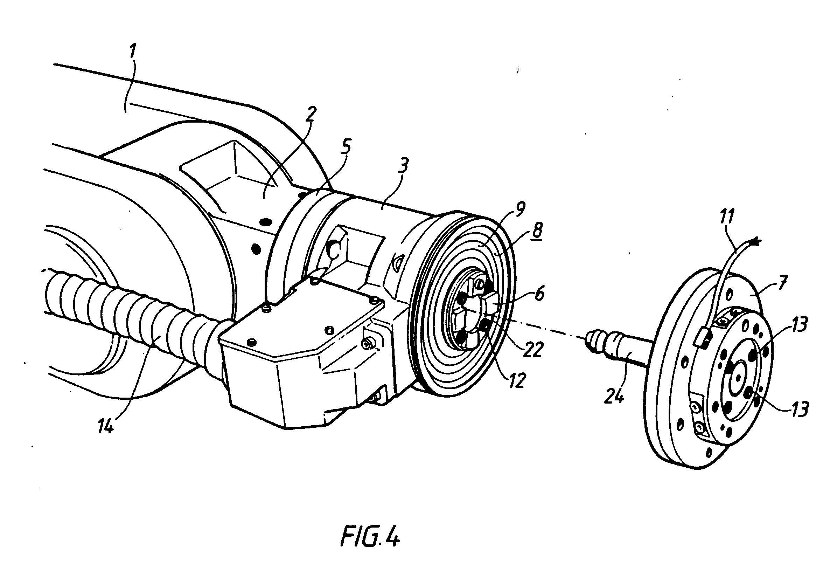

Figure 4 shows the outer end of the housing 3 and the tool holder attachment 6 rotatably journalled in the housing 3, the shaft of the attachment extending through the housing 3 to the rotating disc 5. Detached from the tool holder attachment 6, the actual tool holder 7 is shown to the right in Figure 4. At the boundary 8 between the housing 3 and the tool holder 7, the housing 3 is provided with concentric slip rings 9. As will be clear from Figure 4, the slip rings 9 have different radii, the axis of rotation of the tool holder attachment 6 defining the centre. The slip rings 9 are flat and washer-shaped. In the attached position of the tool holder 7, collector shoes 10 make contact with the slip rings 9, the collector shoes 10 being arranged concealed on the tool holder 7. The electrical connection from the collector shoes 10 is extended through the holder 7 and is joined by means of a short cable 11 to a tool fixedly arranged on the holder 7 (not shown). 12 designates channel openings for the working medium of a pneumatic or hydraulic system. A rubber packing 22 is arranged around the openings 12. When the tool holder 7 is inserted into the attachment 6, these channels are brought into sealing connection with corresponding channels in the tool holder 7. These channels run through the holder 7 and open out into the openings 13, from where the working medium (for example compressed air) is channels to the tool itself. A reinforced casing 14 surrounds electric wires and hoses for a pneumatic or hydraulic system.

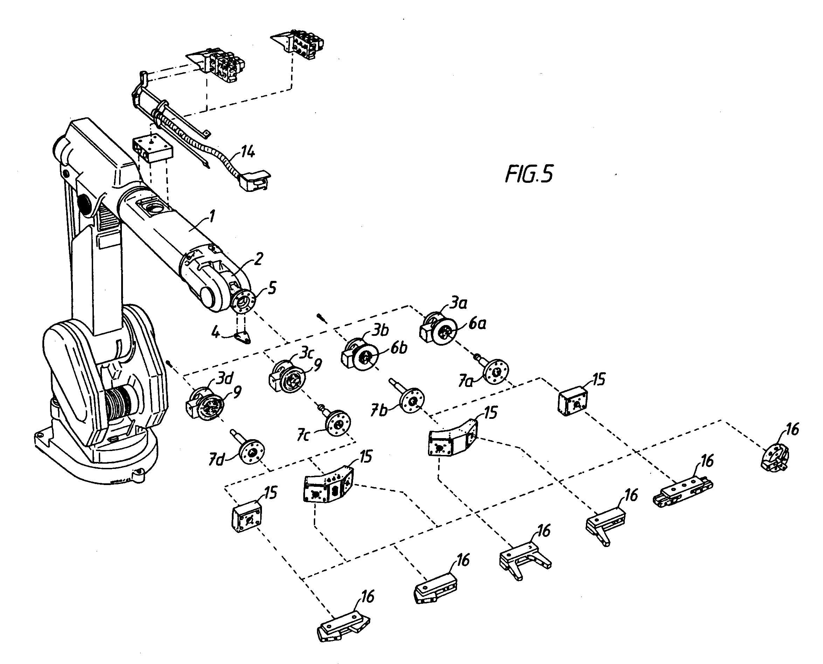

Figure 5 shows the rotating disc 5 attached to the robot hand 2. On the rotating disc 5 is mounted the swivel, and the housing 3 is fixed to the robot hand 2 by means of the holder 4. Inside the housing 3 is arranged a rotatable tool holder attachment 6 which is connected to the rotating disc 5. In the same way as housing 3 and attachment 6, the tool holder 7 is shown in four different embodiments, a, b, c and d, whereby a designates a pneumatically operated locking device for fixing the holder 7 to the attachment 6, and b designates a manual solution. Neither a nor b has any electrical connection between the housing 3 and the holder 7. c and d designate the corresponding automatic and manual operation of the locking between the holder 7 and the attachment 6. In addition there is an electrical connection via slip rings 9 between the housing 3 and the holder 7. All the tool holders 7a-d are fed with compressed air via channels in the housing 3 and the attachment 6.

Further, numeral 15 in Figure 5 designates different kinds of tools which in turn are provided with different grippers 16.

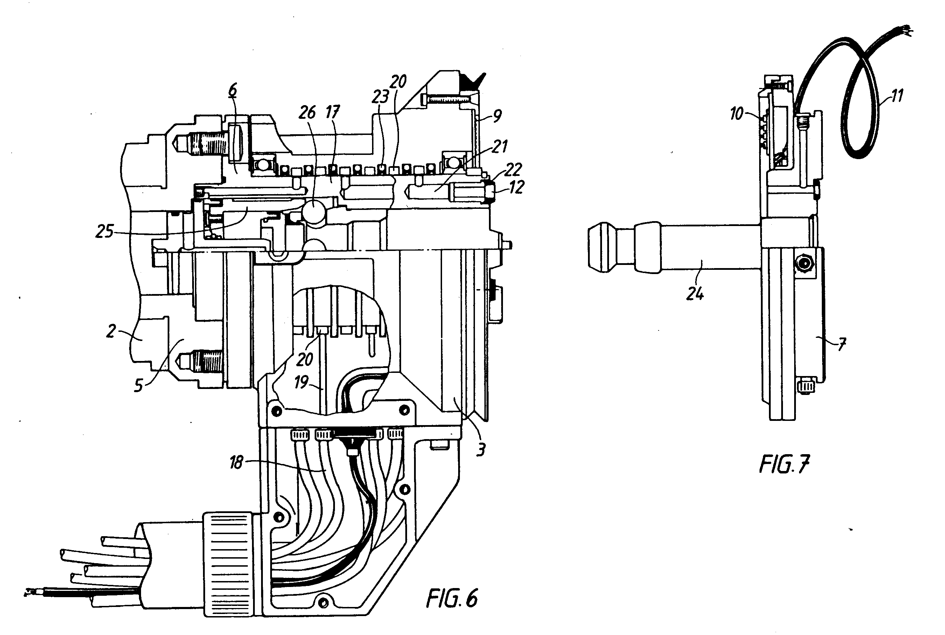

Figures 6 and 7 represent a side view partly sectioned and partly with a broken-off walls of the housing 3 and the tool holder 7. The shaft 17 of the tool holder attachment 6 is rotatably journalled in the housing 3, which in turn is fixed to the robot hand 2. Figure 6 shows how hoses 18 are connected to channels 19 in the housing 3. These channels 19 open out into slots 20 arranged at the boundary between the shaft 17 and the housing 3. The slots 20 extend annularly around the shaft 17 and are either provided in the housing 3 or in the shaft 17. From the slots 20 channels 21 in the shaft 17 extend to openings 12 surrounded by rubber packings 22. On both sides of the slots 20 there are arranged annular seals 23 to prevent leakage of compressed air or oil along the shaft 17. The slip rings 9 are concentrically arranged around the axis of rotation of the swivel, and 10 designates the corresponding collector shoes on the tool holder 7. The tool holder 7 is provided with a rod 24 which can be locked to the tool holder attachment 6 by means of a ball-type lock 26 urged by a compressed-air operated sleeve 25.

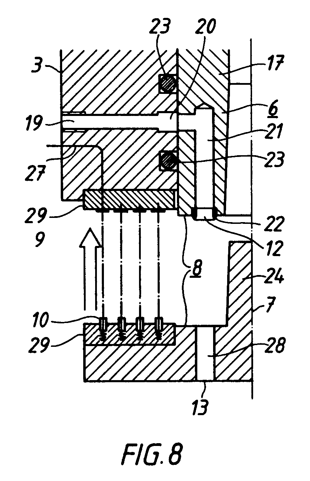

Figure 8 shows a schematic sketch of the housing 3 with the tool attachment 6 and the associated tool holder 7. Only the half on one side of the axis of rotation, extending perpendicularly in Figure 8, is shown. The figure shows how an electric conductor 27 is connected to a slip ring 9, which may be fixed on an insulating plate 29. From the slip ring 9 the electric current can be passed to a tool (not shown) via a collector shoe 10 when the tool holder 7 is inserted into the tool attachment 6 so that the collector shoe 10 makes contact with the slip ring 9. The figure also shows how the pneumatic connection between the housing 3 and the tool holder 7 is established and broken via the channel 19, the slots 20, the channel 21, the opening 12, the channel 28 and the opening 13. The rubber packing 22 ensures that the channels 21 and 28 are sealingly connected to each other. The annular seals 23 on both sides of the slot 20 also prevent leakage along the shaft 17.

## Claims

1. Industrial robot whose hand (2) carries a housing (3) and a tool holder attachment (6) rotatably journalled in said housing (3), the robot hand further comprising a tool holder (7) and an arrangement of slip rings and brushes for supplying electric current from a first portion of the robot hand to a second portion rotatably arranged in said first portion, **characterized** in that the tool holder (7) is adapted to be detachably connected to said tool holder attachment (6), and that an automatically breakable electrical connection is provided between said housing (3) and said tool holder (7) by means of slip rings (9) arranged on either the housing (3) or the tool holder (7) and by means of corresponding brushes (10), arranged on that one of said two parts (6,7) which does not carry the associated slip rings and adapted to make contact with said associated slip rings (9) on insertion of the tool holder (7) into the tool holder attachment (6).

2. Industrial robot according to Claim 1, **characterized** in that a pneumatic or hydraulic connection is established between said housing (3) and said tool holder (7) via channels (19) provided in said housing (3), said channels (19) opening out at the boundary between said housing (3) and the shaft (17) of the tool holder attachment (6), rotatably journalled in said housing (3), that said channels (19) communicate with slots (20) arranged around said shaft (17) and being provided either in said shaft (17) or in said housing (3), that channels (21) are arranged in said tool holder attachment (6) communicating with said slots (20) and opening out at the boundary (8) between said housing (3) and said detachable tool holder (7), and that the tool holder (7) is provided which corresponding channels (28) adapted to be brought, upon the insertion of said tool holder (7) into said tool holder attachment (6), into sealing connection with the channels (21) in said tool holder attachment (6).

3. Industrial robot according to Claim 1 or 2, **characterized** in that the slip rings (9) are applied in that part of the boundary (8) between said housing (3) and said tool holder (7) which makes a right angle with the axis of rotation of said tool holder attachment (6) and consist of concentric, flat, washer-shaped rings having different radii and being concentrically arranged with respect to the axis of rotation of the tool holder attachment (6).

4. Industrial robot according to any of the preceding Claims, **characterized** in that the brushes (10) consist of leaf springs.

## Revendications

1. Robot industriel dont la main (2) porte un carter (3) et un adaptateur de porte-outil (6) monté de façon tournante dans le carter (3), la main de robot comprenant en outre un porte-outil (7) et une combinaison de pistes circulaires et de balais qui est destinée à fournir du courant électrique, à partir d'une première partie de la main de robot, à une seconde partie qui est montée de façon tournante dans la première partie, **caractérisé** en ce que le porte-outil (7) est conçu de façon à pouvoir être fixé de manière amovible à l'adaptateur de porte-outil (6), et en ce qu'une connexion électrique pouvant être rompue automatiquement est établie entre le carter (3) et le porte-outil (7) au moyen de pistes circulaires (9) qui sont formées soit dans le carter (3), soit dans le porteoutil (7), et au moyen de balais correspondants (10) qui sont disposés sur celle de ces deux pièces (6, 7) qui ne porte pas les pistes circulaires associées, ces balais étant conçus de façon à établir un contact électrique avec les pistes circulaires associées (9) au moment de l'introduction du porte-outil (7) dans l'adaptateur de porte-outil (6).

2. Robot industriel selon la revendication 1, **caractérisé** en ce qu'une connexion pneumatique ou hydraulique est établie entre le carter (3) et le porteoutil (7) par l'intermédiaire de canaux (19) qui sont formés dans le carter (3), ces canaux (19) débouchant à la jonction entre le carter (3) et l'arbre (17) de l'adaptateur de porte-outil (6), qui est monté de façon tournante dans le carter (3), en ce que ces canaux (19) communiquent avec des rainures (20) qui sont disposées autour de l'arbre (17) et qui sont formées dans l'arbre (17) ou dans le carter (3), en ce que des canaux (21) sont formés dans l'adaptateur de porte-outil (6), de façon à communiquer avec les rainures (20) et à déboucher à la jonction (8) entre le carter (3) et le porte-outil détachable (7), et en ce que le porte-outil (7) est muni de canaux correspondants (28) qui sont conçus pour établir une jonction hermétique avec les canaux (21) dans l'adaptateur de porte-outil (6), au moment de l'introduction du porte-outil (7) dans l'adaptateur de porte-outil (6).

3. Robot industriel selon la revendication 1 ou 2, **caractérisé** en ce que les pistes circulaires (9) sont formées dans la partie de la jonction (8) entre le carter (3) et le porte-outil (7) qui est orientée perpendiculairement à l'axe de rotation de l'adaptateur de porteoutil (6), et elles sont constituées par des anneaux concentriques plats en forme de rondelles qui ont des rayons différents et qui sont disposés de façon à être centrés sur l'axe de rotation de l'adaptateur de porteoutil (6).

4. Robot industriel selon l'une quelconque des revendications précédentes, **caractérisé** en ce que les balais (10) sont constitués par des ressorts à lames.

## Patentansprüche

1. Industrie-Roboter, dessen Hand (2) ein Gehäuse (3) und eine Werkzeug-Haltevorrichtung (6) trägt, die drehbar in dem genannten Gehäuse (3) gelagert ist, wobei die Roboterhand ferner versehen ist mit einem Werkzeughalter (7) und einer Anordnung aus Schleifringen und Bürsten zur Übertragung von elektrischem Strom von dem ersten Teil der Roboterhand zu einem zweiten Teil, welches drehbar in dem ersten Teil angeordnet ist, **dadurch gekennzeichnet,** daß der Werkzeughalter (7) abnehmabar mit der genannten Werkzeug-Haltevorrichtung (6) verbunden ist, und daß eine automatisch unterbrechbare elektrische Verbindung zwischen dem genannten Gehäuse (3) und dem genannten Werkzeughalter (7) vorhanden ist, die gebildet wird von Schleifringen (9), die entweder an dem Gehäuse (3) oder dem Werkzeughalter (7) angeordnet sind, und von entsprechenden Bürsten (10), die an demjenigen der beiden Teile (6,7) angeordnet sind, welches nicht die zugehörigen Schleifringe trägt, und die einen Kontakt mit den genannten zugehörigen Schleifringen (9) beim Einsetzen des Werkzeughalters (7) in die Werkzeug-Haltevorrichtung (6) herstellen.

2. Industrie-Roboter nach Anspruch, **dadurch gekennzeichnet,** daß zwischen dem genannten Gehäuse (3) und dem genannten Werkzeughalter (7) eine pneumatische oder hydraulische Verbindung über Kanäle (19) besteht, die in dem genannten Gehäuse (3) vorhanden sind und die an der Grenze zwischen dem genannten Gehäuse (3) und der Welle (17) der Werkzeug-Haltevorrichtung (6), die drehbar in dem genannten Gehäuse (3) gelagert ist, münden, daß die genannten Kanäle (19) mit Nuten (20) in Verbindung stehen, die um die genannte Welle (17) herum angeordnet sind, und zwar entweder in der genannten Welle (17) selbst oder in dem genannten Gehäuse (3), daß in der Werkzeug-Haltevorrichtung (6) Kanäle (21) angeordnet sind, die mit den genannten Nuten (20) in Verbindung stehen und an der Grenze (8) zwischen dem genannten Gehäuse (3) und dem genannten abnehmbaren Werkzeughalter (7) münden, und daß dem Werkzeughalter (7) mit entsprechenden Kanälen (28) versehen ist, die so beschaffen sind, daß sie beim Einsetzen des genannten Werkzeughalters (7) in die genannte Werkzeug-Haltevorrichtung (6) eine dichtende Verbindung mit-den Kanälen (21) in der genannten Werkzeug-Haltevorrichtung (6) bilden.

3. Industrie-Roboter nach einem der Ansprüche 1 und 2, **dadurch gekennzeichnet,** daß die Schleifringe (9) in dem Teil der Begrenzung (8) zwischen dem genannten Gehäuse (3) und dem genannten Werkzeughalter (7) angebracht sind, der einen rechten Winkel mit der Drehachse der genannten Werkzeug-Haltevorrichtung (6) bildet, und aus flachen konzentrischen wie Dichtungsringe geformten Ringen bestehen, die unterschiedliche Radien haben und konzentrisch in Bezug auf die Drehachse der WerkzeugHaltevorrichtung (6) angeordnet sind.

4. Industrie-Roboter nach einem der vorhergehenden Ansprüche, **dadurch gekennzeichnet,** daß die Bürsten (10) aus Blattfedern bestehen.

FIG.2

FIG.1

FIG.3

EP 0 288 744 B1

FIG.4

EP 0 288 744 B1

FIG.5

EP 0 288 744 B1

FIG. 6

FIG. 7

FIG.8